# EUROPÄISCHE PATENTSCHRIFT

(11) **EP 1 462 624 B1**
(45) Veröffentlichungstag und Bekanntmachung des Hinweises auf die Patenterteilung: **17.08.2005**
(21) Anmeldenummer: 04001408.6
(22) Anmeldetag: 23.01.2004
(51) Int. Cl.: F01N 3/30

(54) **Sekundärluftventil**
Secondary air valve
Vanne d'air secondaire

(30) Priorität: 22.03.2003 DE 10312925
(43) Veröffentlichungstag der Anmeldung: 29.09.2004
(73) Patentinhaber: Pierburg GmbH, 41460 Neuss (DE)
(72) Erfinder: Burgfels, Peter, 41363 Jüchen (DE)
(74) Vertreter: Ter Smitten, Hans

(56) Entgegenhaltungen:
- DE-A- 10 001 863
- DE-A- 10 007 969
- DE-A- 10 041 128

## Beschreibung

Die Erfindung betrifft eine Sekundärluftventilvorrichtung für Verbrennungskraftmaschinen mit einem Gehäuse, in dem ein Stellventil mit einem Ventilschließglied angeordnet ist, und welches einen in eine Ventilkammer mündenden Sekundärlufteinlaßkanal und zumindest zwei Sekundärluftauslaßkanäle aufweist, die voneinander getrennt und jeweils mit einer Abgasleitung verbunden angeordnet sind.

Sekundärluftventilvorrichtungen nach dem Oberbegriff des Anspruchs 1 dienen dazu die Zuführung eines von einer Sekundärluftpumpe geförderten Frischluftstromes zum Abgasstrom einer Vebrennungskraftmaschine zu steuern, bzw. in Betriebszuständen ohne Frischluftzuführung ein Rückströmen von heißem Abgas zur Luftpumpe zu verhindern. Durch eine solche Zuführung von Sekundärluft zum Abgas wird eine Reduzierung der Schadstoffe im Abgas erreicht.

In der Vergangenheit traten Probleme durch Überlagerung der Abgassäulen beispielsweise von einer Zylinderbank zur anderen bei V-Motoren auf, wodurch ein Drehmomenteinbruch sowie ein Temperaturanstieg und damit verbunden eine Verkokung der Abgasleitungen mit den damit verbunden Nachteilen auftrat. Zur Reduzierung dieser Überlagerungen der Abgaspulsationen wurden mehrere Abgasleitungen beispielsweise je Zylinderbank eine separate Abgasleitung eingeführt. Entsprechend wurde für jede Abgasleitung ein separates Sekundärluftventil eingesetzt.

In der DE 100 41 128 A1 wird aus diesem Grunde eine Sekundärluftzuführeinrichtung mit einem Sekundärluftventil beschrieben, welches einen Sekundärlufteinlaßkanal und zumindest zwei Sekundärluftauslaßkanäle aufweist, die durch einen Wandbereich voneinander getrennt sind. Dabei sind in einem Gehäuse zwei Ventilschließglieder also ein Ventilschließglied pro Abgaskanal angeordnet, die miteinander gekoppelt sein können. Aufgrund der Trennung der beiden Auslaßkanäle beziehungsweise der beiden Abgaskanäle durch die Wand in der Sekundärluftventilvorrichtung wird eine starke thermische Belastung der Ventilvorrichtung durch das Abgas, was nun nicht mehr von einem Abgasstrang zum anderen strömen kann, verhindert. Zwar wird durch diese Ausführungsform der benötigte Bauraum verringert und Kosten gegenüber der Ausführung mit zwei einzelnen Sekundärluftventilen eingespart, aber der benötigte Bauraum bleibt nach wie vor deutlich größer als für ein Sekundärluftventil der ursprünglichen Form in nur einem Abgasstrang.

Aufgabe der Erfindung ist es daher, eine Sekundärluftventilvorrichtung zu entwickeln, bei der der benötigte Bauraum und die Bauteileanzahl minimiert werden, so daß Montage- und Herstellkosten eingespart werden können, wobei gleichzeitig die Trennung der Auslaßkanäle untereinander sowie des Einlaßkanals von den Auslaßkanälen verwirklicht werden sollen.

Diese Aufgabe wird dadurch gelöst, daß in der Ventilkammer eine Wand angeordnet ist, die die Ventilkammer in zwei voneinander getrennte Hälften unterteilt, wobei der Einlaßkanal in die erste Ventilkammerhälfte und der erste Auslaßkanal in die zweite Ventilkammerhälfte münden, und daß der zweite Auslaßkanal in einen Raum mündet, dessen fluidische Verbindung zur Ventilkammer durch das Ventilschließglied unterbrechbar ist. Durch eine solche Ausführungsform ist es möglich mit nur einem Ventilschließglied, welches mit einem Ventilsitz in Wirkverbindung steht, sowohl die Abgaskanäle gegeneinander als auch den Einlaßkanal zu den Auslaßkanälen hin dicht zu verschließen.

Vorteilhafterweise weist eine im Gehäuse angeordnete Ventilsitzplatte zwei Öffnungen auf, wobei die erste Öffnung eine fluidische Verbindung zwischen der ersten Ventilkammerhälfte und dem Raum und die zweite Öffnung eine fluidische Verbindung zwischen dem Raum und der zweiten Ventilkammerhälfte herstellt, wobei die Öffnungen durch das Ventilschließglied verschließbar sind. Dadurch wird es möglich, daß Sekundärluft bei geöffnetem Sekundärluftventil vom Einlaßkanal über die erste Öffnung der Ventilsitzplatte in den Raum strömen kann und von dort aus sowohl direkt über den zweiten Auslaßkanal zum zweiten Abgaskanal, als auch über die zweite Öffnung der Ventilsitzplatte vom Raum in die zweite Ventilkammerhälfte und von dort aus über den ersten Auslaßkanal zum ersten Abgaskanal strömen kann. Somit werden durch ein Sekundärluftventil mit nur einem Ventilstellglied, also einem Ventilschließkörper und einem Ventilsitz, alle für eine sichere Funktion der Sekundärluftzuführeinrichtung wichtigen Voraussetzungen geschaffen. Sowohl die geforderten Strömungen bei geöffnetem Ventil, als auch die erforderlichen Absperrungen bei geschlossenem Ventil sind sicher gestellt.

In einer bevorzugten Ausführungsform ist die Wand in der Ventilkammer einstückig mit dem Gehäuse hergestellt, so daß kein zusätzlicher Montageschritt zur Befestigung der Wand erforderlich ist.

In einer weiteren Ausgestaltung der Erfindung ist die Ventilsitzplatte ein Einsatzstück, welches in das Gehäuse gesteckt wird. Des weiteren wird ein Einschubteil in das Gehäuse gesteckt und befestigt, wobei der zweite Auslaßkanal in den durch das Einschubteil gebildeten Raum mündet. Durch diese Ausführungsform kann das Gehäuse in gewohnter Weise gegossen werden. Des weiteren ist es möglich die Bearbeitung der Ventilsitzplatte in einem getrennten Arbeitsgang außerhalb des Gehäuses durchzuführen, so daß der erforderliche Aufwand zur Bearbeitung des Ventilsitzes deutlich verringert werden kann. Die gesamte Montage der Sekundärluftventilvorrichtung ist aufgrund der guten Zugänglichkeit aller Bauteile einfach und kostengünstig zu verwirklichen. Auch ein eventuell erforderliches Ersetzen einzelner Bauteile der Vorrichtung wird durch die gute Zugänglichkeit ermöglicht.

Bei einer zweiten Ausführungsform ist das Gehäuse mehrteilig ausgeführt, wobei ein erstes Gehäuseteil den Sekundärlufteinlaßkanal aufweist und ein zweites Gehäuseteil die Sekundärluftauslaßkanäle aufweist, wobei die Wand auf der Unterseite der Ventilsitzplatte gasdicht aufliegt. Dabei kann das zweite Gehäuseteil derart mit dem ersten Gehäuseteil verbunden sein, daß die Mittelachsen der Sekundärluftauslaßkanäle parallel zur Mittelachse der Ventilstange verläuft. Dadurch sind vielfältigere Einbaumöglichkeiten im Motorraum gegeben.

Durch die beschriebenen Ausführungsformen wird eine Sekundärluftventilvorrichtung geschaffen, bei der der benötigte Bauraum etwa dem bisheriger Sekundärluftventilvorrichtungen für einen einzelnen Abgaskanal entspricht. Im Vergleich zu bisher bekannten Ausführungsformen mit mehreren unabhängigen Abgaskanälen kann durch diese Ausführungsform die Bauteileanzahl extrem reduziert werden, so daß Montage- und Herstellkosten eingespart werden können. Des weiteren wird die Fehleranfälligkeit durch das nur eine benötigte Ventilstellglied deutlich verringert. Eine Pulsation zwischen den Abgaskanälen sowie eine Verkokung der Abgaskanäle wird ebenso verhindert wie eine thermische Belastung der Sekundärluftpumpe durch das heiße Abgas.

Ausführungsbeispiele der Erfindung sind in den Zeichnungen dargestellt und werden nachfolgend beschrieben.
Figur 1 zeigt eine erfindungsgemäße Sekundärluftventilvorrichtung in geschnittener Darstellung in Seitenansicht.
Figur 2 zeigt einen Schnitt der erfindungsgemäßen Ventilvorrichtung aus Figur 1 entlang der Linie B-B in Draufsicht.
Figur 3 zeigt in perspektivischer Ansicht die Sekundärluftventilvorrichtung in aufgeschnittener Form.
Figur 4 zeigt einen ersten Schnitt einer zweiten Ausführungsform der erfindungsgemäßen Ventilvorrichtung.
Figur 5 zeigt einen zweiten Schnitt der zweiten Ausführungsform der erfindungsgemäßen Ventilvorrichtung.

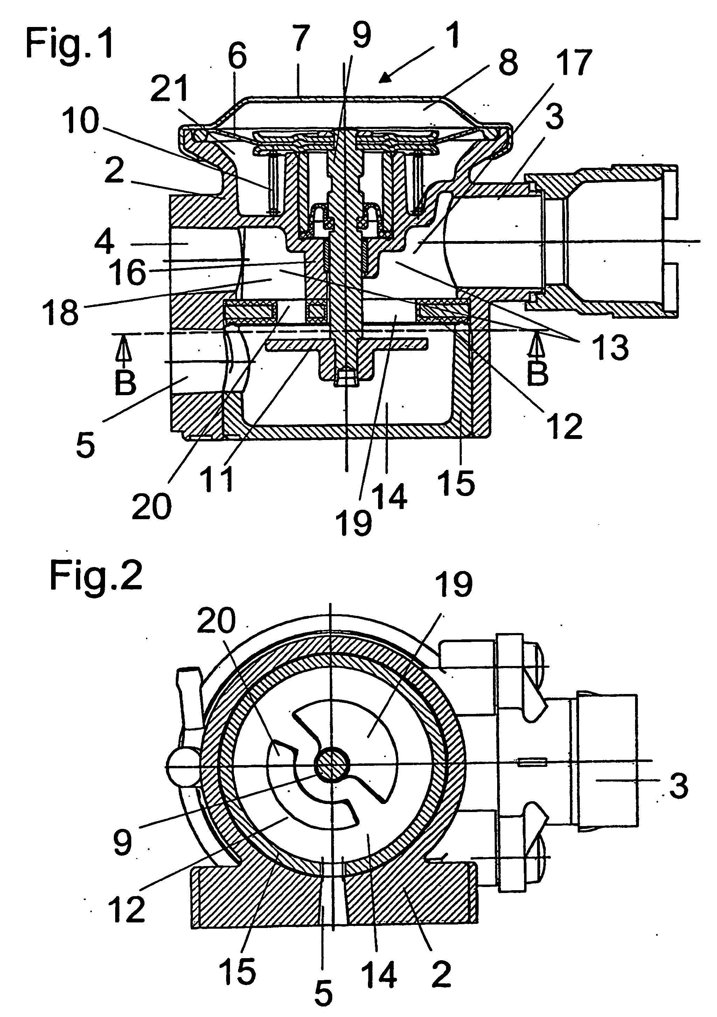

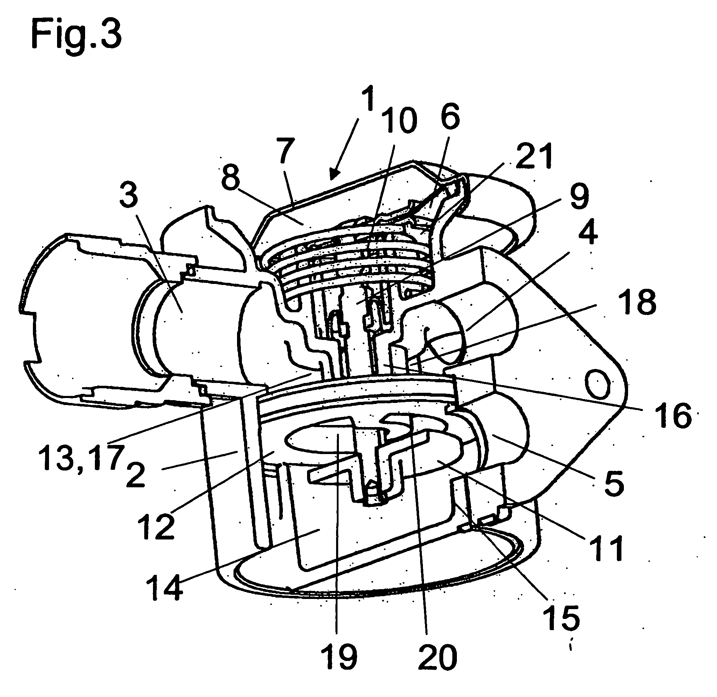

In den Figuren 1 - 3 ist eine Sekundärluftventilvorrichtung dargestellt, bei der ein Stellventil 1 in einem Gehäuse 2 angeordnet ist. Das dargestellte Stellventil 1 ist als Membranventil ausgeführt, welches über einen pneumatischen Steuerdruck angesteuert wird. Es ist auch denkbar, anders angesteuerte Ventile wie z. B. Elektromagnetventile zu verwenden.

Das Gehäuse 2 weist einen Sekundärlufteinlaßkanal 3, der mit einer nicht dargestellten Sekundärluftpumpe verbunden ist, sowie einen ersten Sekundärluftauslaßkanal 4 und einen zweiten Sekundärluftauslaßkanal 5 auf, wobei beide Auslaßkanäle 4, 5 mit je einer zugehörigen nicht dargestellten Abgasleitung verbunden sind.

Das Stellventil 1 besteht im wesentlichen aus einer Membran 6, deren äußere Enden zwischen dem Gehäuse 2 und einem Deckel 7 eingespannt sind. Der zwischen der Membran 6 und dem Deckel 7 entstehende Steuerraum 8 wird mit dem Überdruck der Sekundärluftpumpe beaufschlagt, so daß die Membran und somit eine mit der Membran 6 verbundene Ventilstange 9 gegen den Druck einer Feder 10 bei laufender Sekundärluftpumpe in Öffnungsrichtung bewegt wird. Dadurch wird ein Ventilschließglied 11 von einer Ventilsitzplatte 12 abgehoben. In der vorliegenden Ausführungsform wird diese Ventilsitzplatte 12 von unten gegen einen Anschlag im Gehäuse 2 geschoben. Bei geschlossenem Ventil 1 trennt diese Ventilsitzplatte 12 mit dem Ventilschließglied 11 eine Ventilkammer 13 von einem Raum 14, der durch ein weiteres Einschubteil 15, welches von unten gegen die Ventilsitzplatte 12 geschoben wird und das Gehäuse 2 verschließt, gebildet wird. Dabei münden der Sekundärlufteinlaßkanal 3 und der erste Auslaßkanal 4 in die Ventilkammer 13, während der zweite Auslaßkanal 5 in den Raum 14 mündet, so daß fluidische Verbindungen zwischen den Kanälen 3,4,5 und dem Raum 14 bzw. der Kammer 13 bestehen. Die Ventilkammer 13 wird durch eine Wand 16 in zwei Ventilkammerhälften 17,18 unterteilt, wobei der Sekundärlufteinlaßkanal 3 in die erste Ventilkammerhälfte 17 und der erste Auslaßkanal 4 in die zweite Ventilkammerhälfte 18 mündet. Daraus folgt, daß bei geschlossenem Ventil keine fluidische Verbindung zwischen dem Einlaßkanal 3 und dem Auslaßkanal 4 besteht. Die Ventilsitzplatte 12 ist so ausgeführt, daß sie zwei Öffnungen 19, 20 aufweist, wobei durch die erste Öffnung 19 die Sekundärluft in den Raum 14 strömen und von dort aus, sowohl zum zweiten Auslaßkanal 5, als auch über die zweite Öffnung 20 zum ersten Auslaßkanal 4 strömen kann. Im Umkehrschluß kann bei geschlossenem Ventil keine Pulsation zwischen den beiden Auslaßkanälen 4 und 5 bzw. zwischen den beiden nicht dargestellten Abgaskanälen entstehen, da diese durch das Ventilschließglied 11 und die Ventilsitzplatte 12 voneinander getrennt sind. Auch ein Rückstrom des Abgases zur nicht dargestellten Sekundärluftpumpe wird vermieden, da die Wand 16 des Gehäuses 2 die Strömung vom ersten Auslaßkanal 4 zum Sekundärlufteinlaßkanal 3 verhindert und das Ventilschließglied 11 mit dem Ventilsitz 12 ein Rückströmen des Abgases vom zweiten Auslaßkanal 5 zum Sekundärlufteinlaßkanal 3 verhindert.

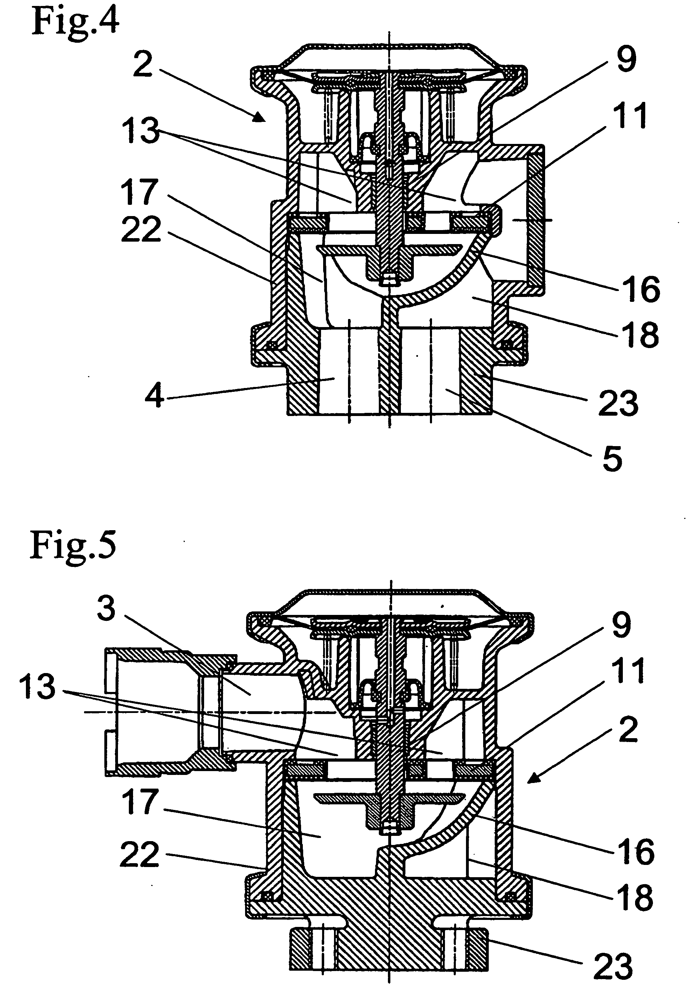

Die Figuren 4 und 5 zeigen eine zweite Ausführungsform der erfindungsgemäßen Ventilvorrichtung. Hierbei ist das Gehäuse 2 mehrteilig ausgeführt. Ein erstes Gehäuseteil 22 weist dabei den Sekundärlufteinlaßkanal 3 auf und ein zweites Gehäuseteil 23 weist Auslaßkanäle 4 und 5 auf. Dadurch, daß das erste Gehäuseteil 22 derart mit dem zweiten Gehäuseteil 23 verbunden ist, daß die Mittelachsen der Sekundärluftauslaßkanäle 4, 5 parallel zur Mittelachse der Ventilstange 9 verlaufen, ergeben sich für eine derartige Sekundärluftventilvorrichtung variablere Einbaumöglichkeiten im Motorraum, da die Sekundärluftauslaßkanäle 4, 5 in diesem Ausführungsbeispiel im 90° Winkel zum Sekundärlufteinlaßkanal 3 angeordnet sind. Die Wand 16 ist, wie in den Figuren 4 und 5 deutlich gezeigt, im vorliegenden Fall als Teilsegment einer Halbkugel ausgeformt, derart, daß die Ventilkammer 13 in die zwei und voneinander getrennten Hälften 17, 18 unterteilt ist, wobei die Wand 16 auf die Unterseite der Ventilsitzplatte 12 gasdicht angreift. Dabei kann die Wand 16 mit dem Gehäuseteil 23 einstückig hergestellt sein.

Es wird deutlich, daß auf diese Weise mit nur einem Ventilschließglied 11 sowohl Pulsationen zwischen den Abgasleitungen als auch eine thermische Gefährdung der Sekundärluftpumpe vermieden werden können, wobei der Platzbedarf eines solchen Ventils nicht größer ist als der üblicher eingesetzter Sekundärluftventile für eine einzelne Abgasleitung.

Es sollte deutlich sein, daß die Ansteuerung des Ventils, sowohl, wie beschrieben, über den Überdruck der Luftpumpe im Steuerraum 8 erfolgen kann, oder gegebenenfalls durch einen in der Verbrennungskraftmaschine abgegriffenen Unterdruck im zweiten Steuerraum 21 stattfinden kann. Ebenso ist es denkbar, ein anders angesteuertes Ventil, beispielsweise ein Elektromagnetventil, zu verwenden oder die Ausführung des Gehäuses bzw. Ventilsitzes dahingehend zu verändern, daß die Unterteilung der hier beschriebenen Ausführung mit Gehäuse 2, Ventilsitzplatte 12 und Einschubteil 15 in anderer Weise erfolgen kann, ohne den Schutzbereich des Hauptanspruches zu verlassen.

## Patentansprüche

1. Sekundärluftventilvorrichtung für Verbrennungskraftmaschinen mit einem Gehäuse, in dem ein Stellventil mit einem Ventilschließglied angeordnet ist, und welches einen in eine Ventilkammer mündenden Sekundärlufteinlaßkanal und zumindest zwei Sekundärluftauslaßkanäle aufweist, die voneinander getrennt und jeweils mit einer Abgasleitung verbunden angeordnet sind, **dadurch gekennzeichnet, daß** in der Ventilkammer (13) eine Wand (16) angeordnet ist, die die Ventilkammer (13) in zwei voneinander getrennte Hälften (17), (18) unterteilt, wobei der Einlaßkanal (3) in die erste Ventilkammerhälfte (17) und der erste Auslaßkanal (4) in die zweite Ventilkammerhälfte (18) münden, und daß der zweite Auslaßkanal (5) in einen Raum (14) mündet, dessen fluidische Verbindung zur Ventilkammer (13) durch das Ventilschließglied (11) unterbrechbar ist.

2. Sekundärluftventilvorrichtung nach Anspruch 1, **dadurch gekennzeichnet, daß** eine im Gehäuse (2) angeordnete Ventilsitzplatte (12) zwei Öffnungen (19,20) aufweist, wobei die erste Öffnung (19) eine fluidische Verbindung zwischen der ersten Ventilkammerhälfte (17) und dem Raum (14), und die zweite Öffnung (20) eine fluidische Verbindung zwischen dem Raum (14) und der zweiten Ventilkammerhälfte (18) herstellt, wobei die Öffnungen (19,20) durch das Ventilschließglied (11) verschließbar sind.

3. Sekundärluftventilvorrichtung nach Anspruch 1 oder 2, **dadurch gekennzeichnet, daß** die Wand (16) einstückig mit dem Gehäuse (2) hergestellt ist.

4. Sekundärluftventilvorrichtung nach einem der vorhergehenden Ansprüche, **dadurch gekennzeichnet, daß** die Ventilsitzplatte (12) ein Einsatzstück ist, welches in das Gehäuse (2) gesteckt ist.

5. Sekundärluftventilvorrichtung nach einem der vorhergehenden Ansprüche, **dadurch gekennzeichnet, daß** ein Einschubteil (15) in das Gehäuse (2) gesteckt ist, wobei der zweite Auslaßkanal (5) in den durch das Einschubteil (15) gebildeten Raum (14) mündet.

6. Sekundärluftventilvorrichtung nach Anspruch 1, **dadurch gekennzeichnet, daß** das Gehäuse (2) mehrteilig ausgeführt ist, wobei ein erstes Gehäuseteil (22) den Sekundärlufteinlaßkanal (3) aufweist und ein zweites Gehäuseteil (23) die Sekundärluftauslaßkanäle (4, 5) aufweist, wobei die Wand (16) auf der Unterseite der Ventilsitzplatte (12) gasdicht aufliegt.

7. Sekundärluftventilvorrichtung nach Anspruch 6, **dadurch gekennzeichnet, daß** das zweite Gehäuseteil (23) derart mit dem ersten Gehäuseteil (22) verbindbar ist, daß die Mittelachsen der Sekundärluftauslaßkanäle (4, 5) parallel zur Mittelachse der Ventilstange (9) verlaufen.

8. Sekundärluftventilvorrichtung nach Anspruch 6 oder 7, **dadurch gekennzeichnet, daß** die Wand (16) mit dem zweiten Gehäuseteil (23) einstückig hergestellt ist.

## Claims

1. Secondary air valve device for combustion engines, with a housing in which a control valve with a valve-closing member is disposed and which has a secondary air inlet port opening into a valve chamber, and at least two secondary air outlet ports which are disposed so as to be separated from one another and each connected to an exhaust pipe, **characterised in that** there is disposed, in the valve chamber (13), a wall (16) which subdivides said valve chamber (13) into two halves (17), (18) which are separated from one another, the inlet port (3) opening into the first half (17) of the valve chamber and the first outlet port (4) opening into the second half (18) of said valve chamber, and that the second outlet port (5) opens into a space (14) whose fluidic connection to the valve chamber (13) can be interrupted by the valve-closing member (11).

2. Secondary air valve device according to claim 1, **characterised in that** a valve seat plate (12) disposed in the housing (2) has two apertures (19, 20), the first aperture (19) producing a fluidic connection between the first half (17) of the valve chamber and the space (14), and the second aperture (20) producing a fluidic connection between said space (14) and the second half (18) of the valve chamber, it being possible to occlude the apertures (19, 20) by means of the valve-closing member (11).

3. Secondary air valve device according to claim 1 or 2, **characterised in that** the wall (16) is manufactured in one piece with the housing (2).

4. Secondary air valve device according to one of the preceding claims, **characterised in that** the valve seat plate (12) is an insert which is slipped into the housing (2).

5. Secondary air valve device according to one of the preceding claims, **characterised in that** a push-in part (15) is slipped into the housing (2), the second outlet port (5) opening into the space (14) formed by said push-in part (15).

6. Secondary air valve device according to claim 1, **characterised in that** the housing (2) is of multi-part design, a first part (22) of the housing having the secondary air inlet port (3) and a second part (23) of said housing having the secondary air outlet ports (4, 5), the wall (16) resting on the underside of the valve seat plate (12) in a gas-tight manner.

7. Secondary air valve device according to claim 6, **characterised in that** the second part (23) of the housing can be connected to the first part (22) of said housing in such a way that the central axes of the secondary air outlet ports (4, 5) extend parallel to the central axis of the valve rod (9).

8. Secondary air valve device according to claim 6 or 7, **characterised in that** the wall (16) is manufactured in one piece with the second part (23) of the housing.

## Revendications

1. Dispositif de vanne d'air secondaire pour moteurs à combustion interne comportant un corps dans lequel est disposée une vanne de régulation comportant un organe obturateur de vanne, et qui présente un canal d'admission d'air secondaire débouchant dans une chambre de vanne et au moins deux canaux d'évacuation d'air secondaire qui sont disposés séparément l'un de l'autre et sont reliés chacun à une conduite de gaz d'échappement, **caractérisé en ce que** dans la chambre de vanne (13) est disposée une paroi (16) qui divise la chambre de vanne (13) en deux moitiés (17, 18) séparées l'une de l'autre, le canal d'admission (3) débouchant dans la première moitié de chambre de vanne (18) et le premier canal d'évacuation (4) dans la seconde moitié de chambre de vanne (18), et que le second canal d'évacuation (5) débouche dans un espace (14) dont la liaison fluidique avec la chambre de vanne (13) peut être interrompue par l'organe obturateur de vanne (11).

2. Dispositif de vanne d'air secondaire selon la revendication 1, **caractérisé en ce qu'**une plaque de siège de vanne (12) disposée dans le corps (2) présente deux ouvertures (19, 20), la première ouverture (19) établissant une liaison fluidique entre la première moitié de chambre de vanne (17) et l'espace (14) et la seconde ouverture (20) une liaison fluidique entre l'espace (14) et la seconde moitié de chambre de vanne (18), les ouvertures (19, 20) pouvant être fermées par l'organe obturateur (11).

3. Dispositif de vanne d'air secondaire selon la revendication 1 ou 2, **caractérisé en ce que** la paroi (16) est réalisée d'une seule pièce avec le corps (2).

4. Dispositif de vanne d'air secondaire selon l'une des revendications précédentes, **caractérisé en ce que** la plaque de siège de vanne (12) est un insert qui est emmanché dans le corps (2).

5. Dispositif de vanne d'air secondaire selon l'une des revendications précédentes, **caractérisé en ce qu'**une pièce à insérer (15) est emmanchée dans le corps (2), le second canal d'évacuation (5) débouchant dans l'espace formé par la pièce à insérer (15).

6. Dispositif de vanne d'air secondaire selon la revendication 1, **caractérisé en ce que** le corps (2) est réalisé en plusieurs parties, une première partie de corps (22) comportant le canal d'admission d'air secondaire (3) et une deuxième partie de corps (23) comportant les canaux d'échappement d'air secondaire (4, 5), la paroi (16) s'appuyant de manière étanche aux gaz sur le dessous de la plaque de siège de vanne (12).

7. Dispositif de vanne d'air secondaire selon la revendication 6, **caractérisé en ce que** la secondé partie de corps (23) peut être reliée à la première partie de corps (22) de telle façon que les axes médians des canaux d'échappement d'air secondaire (4, 5) s'étendent parallèlement à l'axe médian de la tige de vanne (9).

8. Dispositif de vanne d'air secondaire selon la revendication 6 ou 7, **caractérisé en ce que** la paroi (16) est réalisée d'une seule pièce avec la seconde partie de corps (23).
